# FASCICULE DE BREVET EUROPEEN

(11) **EP 3 938 278 B1**
(45) Date de publication et mention de la délivrance du brevet: **28.06.2023**
(21) Numéro de dépôt: 20710890.3
(22) Date de dépôt: 09.03.2020
(51) Int. Cl.: B64C 1/14

(54) **PORTE D'AERONEF A MECANISME D'OUVERTURE CONDITIONNELLE SELON DEUX TRAJECTOIRES**
FLUGZEUGTÜR MIT MECHANISMUS ZUM BEDINGTEN ÖFFNEN ENTLANG ZWEIER TRAJEKTORIEN
AIRCRAFT DOOR HAVING A MECHANISM FOR CONDITIONAL OPENING ALONG TWO TRAJECTORIES

(30) Priorité: 12.03.2019 FR 1902540
(43) Date de publication de la demande: 19.01.2022
(73) Titulaire: Latecoere, 31500 Toulouse, Occitanie (FR)
(72) Inventeur: LOUVEL, Fabian, 31280 MONS OCCITANIE (FR); CHABOT, Denis, 31200 TOULOUSE OCCITANIE (FR)
(74) Mandataire: Junca, Eric
(86) Numéro de dépôt international: PCT/EP2020/056262
(87) Numéro de publication internationale: WO 2020/182766

(56) Documents cités:
- EP-A1- 0 677 438
- EP-A1- 3 168 138
- EP-B1- 0 677 438
- WO-A1-2017/076848
- FR-A1- 2 794 717
- FR-B1- 2 794 717
- US-A1- 2011 049 299

## Description

### DOMAINE TECHNIQUE

L'invention concerne le domaine de l'aéronautique et vise une porte d'aéronef munie d'un mécanisme d'ouverture conditionnelle de sécurité.

### ART ANTÉRIEUR

La demande de brevet WO2017076848 décrit une porte d'aéronef comportant :
- une structure de porte et un panneau extérieur fixé sur cette structure de porte ;
- des moyens de verrouillage de la porte sur le fuselage de l'aéronef ;
- un levier intérieur d'ouverture de porte adapté à commander les moyens de verrouillage, ce levier intérieur étant couplé à un volet d'évent par un mécanisme d'ouverture conditionnelle présentant deux modes : un mode autorisant le déverrouillage de la porte lorsque la pression différentielle s'appliquant sur le volet d'évent est inférieure à un seuil prédéterminé ; et un mode empêchant le déverrouillage de la porte lorsque la pression différentielle s'appliquant sur le volet d'évent est supérieure au seuil prédéterminé.

Dans cette porte d'aéronef de l'art antérieur, le mécanisme d'ouverture conditionnelle remplit entre autres une fonction de sécurité. Ce mécanisme autorise l'ouverture de la porte lorsque la pression différentielle est inférieure à un seuil prédéterminé. La pression différentielle est ici définie comme la pression s'appliquant sur la porte compte tenu de la différence entre la pression à l'intérieur de l'aéronef et la pression à l'extérieur de l'aéronef. Lorsque la pression différentielle est inférieure à ce seuil prédéterminé, il s'agit d'une situation où la cabine de l'aéronef n'est pas pressurisée (c'est le cas notamment lorsque l'avion est au sol) et l'ouverture de la porte peut alors se faire sans danger.

À l'inverse, dans le cas où la cabine de l'aéronef est pressurisée, par exemple durant le vol, la pression à l'extérieur de l'aéronef est beaucoup plus faible que la pression à l'intérieur de la cabine, cette dernière étant maintenue à une pression proche de la pression atmosphérique par les équipements de pressurisation de l'aéronef. La pression différentielle est alors importante et l'ouverture de la porte dans ces conditions peut représenter un danger. Dans ces conditions, l'ouverture de la porte est empêchée par le mécanisme d'ouverture conditionnelle qui ne permet pas la commande des moyens de verrouillage par le levier intérieur.

Ainsi, même si un opérateur manipule accidentellement ou intentionnellement le levier intérieur, la porte ne peut pas être ouverte. Le déverrouillage des moyens de verrouillage par le levier intérieur, et donc l'ouverture de la porte, n'est possible que lorsque la pression différentielle présente une valeur acceptable, c'est à dire lorsqu'elle est inférieure au seuil prédéterminé.

### EXPOSÉ DE L'INVENTION

L'invention a pour but d'améliorer les portes de l'aéronef de l'art antérieur en ce qui concerne l'agencement du mécanisme d'ouverture conditionnelle de sécurité.

À cet effet, l'invention vise une porte selon la revendication 1.

Le volet d'évent subit la pression extérieure à l'aéronef et la pression intérieure de l'aéronef (la pression de la cabine) respectivement sur sa face extérieure et sa face intérieure. Lorsque la pression différentielle est faible, et plus précisément inférieure à un seuil prédéterminé, le volet d'évent peut donc être déplacé par la seule force de l'opérateur actionnant le levier intérieur. Lorsque la pression différentielle est supérieure à la valeur prédéterminée, cette pression s'appliquant sur la face intérieure du volet d'évent est suffisamment élevée pour provoquer le fonctionnement spécifique sécuritaire du mécanisme d'actionnement du volet d'évent faisant en sorte que l'opérateur agissant sur le levier intérieur d'ouverture n'ait pas la force de provoquer le déplacement du volet d'évent.

Dans la présente description et les revendications, l'adjectif « intérieur » est relatif à l'intérieur de l'aéronef, c'est-à-dire à la cabine qui est délimitée par le fuselage de l'aéronef et qui peut être pressurisée en vol. L'adjectif « extérieur » est quant à lui relatif à l'extérieur de l'aéronef, c'est-à-dire au milieu ambiant dans lequel est placé l'aéronef. Un élément situé à l'intérieur de la cabine de l'aéronef est ainsi qualifié d'intérieur tandis qu'un élément situé en dehors de l'aéronef est qualifié d'extérieur.

L'invention propose une porte d'aéronef munie d'un mécanisme d'ouverture conditionnelle de sécurité d'une grande simplicité et par conséquent d'une grande robustesse, ces critères étant particulièrement recherchés dans le domaine de l'aéronautique.

Le mécanisme d'ouverture conditionnelle mis en oeuvre par l'invention comporte peut de pièces en mouvement et ne comporte aucune des pièces courantes dans l'art antérieur, telles que cames, chemins de came, galets, palonniers de renvoi, mécanismes articulés. Les pièces mobiles qui ne participent pas directement à la commande des moyens de verrouillage ou à l'articulation du volet peuvent ici être complètement supprimées. Ceci entraine, en plus du gain de robustesse, un gain de poids associé à un gain de coûts qui constituent également une préoccupation courante dans le domaine de l'aéronautique.

L'invention est de plus adaptable à un grand nombre d'agencements du levier d'ouverture interne et des moyens de verrouillage. Le premier axe de pivotement et le deuxième axe de pivotement peuvent être agencés pour correspondre à un type particulier d'agencement de porte de même que la butée de volet et la surface d'arrêt peuvent être positionnées pour s'adapter à une configuration particulière.

La porte d'aéronef selon l'invention peut comporter les caractéristiques additionnelles suivantes, seules ou en combinaison :
- la surface d'arrêt est disposée sur la structure de porte ;
- la surface d'arrêt est définie par un bossage de la structure de porte ;
- la butée de volet comporte une dent saillante du volet d'évent ;
- la butée de volet comporte deux butées disposées sur les rebords latéraux du volet d'évent, la surface d'arrêt étant constituée d'une surface d'arrêt en vis-à-vis de chacune de ces butées ;
- le ressort comporte deux ressorts de traction dont les extrémités sont reliées respectivement au volet d'évent et au levier intérieur ;
- le deuxième axe de pivotement est défini par au moins un pivot par lequel le volet d'évent est monté rotatif sur le levier extérieur ;
- le ressort présente une raideur adaptée à :
   - maintenir solidaires le levier intérieur et le volet d'évent lorsque la pression différentielle appliquée au volet d'évent est inférieure au seuil prédéterminé ;
   - permettre le pivotement du levier intérieur par rapport au volet d'évent lorsque la pression différentielle s'appliquant sur le volet d'évent est supérieure au seuil prédéterminé ;
- le premier axe de pivotement et le deuxième axe de pivotement sont parallèles et non confondus ;
- le volet d'évent comporte un joint d'étanchéité sur son pourtour ;
- le joint d'étanchéité présente une épaisseur adaptée à maintenir l'étanchéité entre le volet d'évent et le panneau extérieur lorsque la butée de volet est dans sa deuxième trajectoire et est disposée contre la surface d'arrêt ;
- le joint d'étanchéité présente une épaisseur adaptée à créer une fuite calibrée entre le volet d'évent et le panneau extérieur lorsque la butée de volet est dans sa deuxième trajectoire et est disposée contre la surface d'arrêt ;
- la première trajectoire est une trajectoire en arc de cercle centrée sur le premier axe de pivotement ;
- le premier axe de pivotement est défini par un arbre monté par des paliers sur la structure de porte, le levier intérieur étant fixé sur cet arbre ;
- ledit arbre est solidaire d'un mécanisme de commande des moyens de verrouillage de la porte ;
- le levier intérieur comporte une patte de levier, et le volet d'évent comporte une butée, la patte de levier étant disposée contre ladite butée lorsque le volet d'évent et le levier intérieur sont disposés l'un contre l'autre.

### PRÉSENTATION DES FIGURES

D'autres caractéristiques et avantages de l'invention ressortiront de la description qui en est faite ci-après, à titre indicatif et nullement limitatif, en référence aux dessins annexés, dans lesquels :
[Fig.1] La figure 1 représente en perspective une porte d'aéronef selon l'invention, vue de l'intérieur ;
[Fig.2] La figure 2 représente la porte de la figure 1 dans une configuration où l'ouverture est permise ;
[Fig.3] La figure 3 représente la porte de la figure 1 dans une configuration où l'ouverture n'est pas permise ;
[Fig.4] La figure 4 est une vue de face partielle de la porte de la figure 1 ;
[Fig.5] La figure 5 est une vue selon la coupe AA de la figure 4 ;
[Fig.6] La figure 6 est une vue similaire à la figure 5 dans une configuration où l'ouverture de la porte est permise ;
[Fig.7] La figure 7 est une vue similaire à la figure 5 dans une configuration où l'ouverture de la porte n'est pas permise.

### DESCRIPTION DÉTAILLÉE

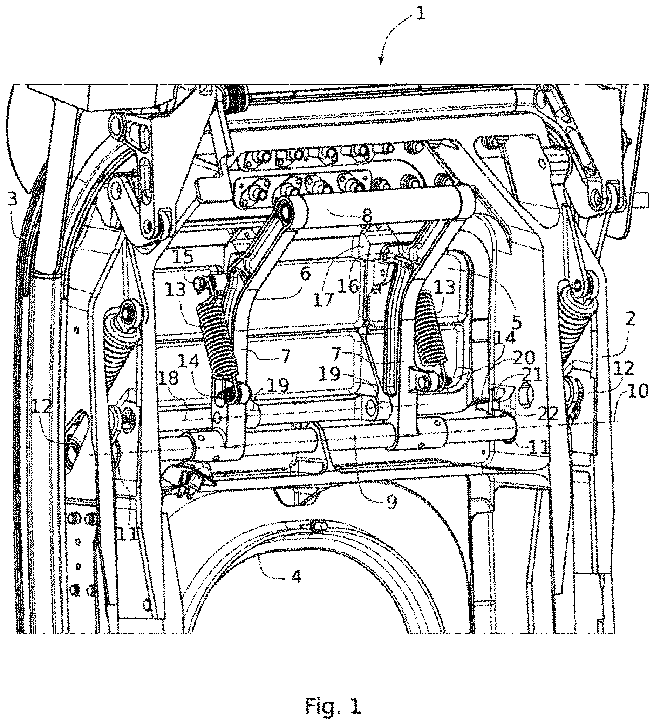

La figure 1 est une représentation partielle d'une porte d'aéronef 1 selon l'invention. Cette porte 1 comprend une structure de porte 2 faite de poutres et de longerons permettant la tenue mécanique de la porte 1 et le support des différents équipements qu'une telle porte 1 reçoit généralement. La porte 1 comprend également un panneau extérieur 3 fixé sur la structure de porte 2. La porte 1 peut être une porte d'embarquement et de débarquement de passagers, une porte d'issue de secours, ou tout autre ouvrant de l'aéronef.

Le panneau extérieur 3, couramment dénommé « peau », se place dans l'alignement du fuselage de l'aéronef lorsque la porte 1 est fermée. La porte 1 est mobile entre une position ouverte et cette position fermée grâce à des moyens d'articulation connus tels que charnières, parallélogrammes déformables, etc. (non représentés). Dans le cas de certaines portes d'évacuation d'urgence, la porte 1 peut ne pas comporter de charnières.

Lorsque la porte 1 est en position fermée, la structure 2 de porte est placée en regard de la structure de l'aéronef et des moyens de verrouillage sont prévus entre ces deux structures. Ces moyens de verrouillage de la porte dans sa position fermée sont connus et ne seront pas décrits plus en détail ici. Il s'agit par exemple de butées situées sur la structure 2 de porte et de contre-butées situées sur la structure de l'aéronef. Les moyens de verrouillage verrouillent les butées et les contre-butées les unes contre les autres de sorte que la porte soit maintenue en place et verrouillée dans l'encadrement qui lui est réservé dans le fuselage.

La structure de porte 2 peut présenter des ouvertures destinées à recevoir des hublots ou des panneaux divers. Dans le présent exemple la porte 1 comprend un hublot 4 et un volet d'évent 5.

La vue partielle de la figure 1 représente, dans cet exemple, la partie supérieure de la porte 1 dans laquelle est situé un levier d'ouverture 6. Le levier d'ouverture 6 comporte ici deux bras 7 reliés par une poignée 8. Le levier d'ouverture 6 est fixé sur un arbre 9. L'arbre 9 est monté pivotant sur la structure 2 de porte, grâce à des paliers 11, autour d'un premier axe de pivotement 10.

L'arbre 9 est solidaire d'un mécanisme de commande 12 de sorte que le levier d'ouverture 6 puisse actionner le mécanisme de commande 12 en vue de verrouiller ou déverrouiller la porte 1. Dans le présent exemple, le levier d'ouverture 6 est représenté en position de verrouillage sur la figure 1. Le déverrouillage de la porte 1 s'obtient en tirant la poignée 8 vers le bas.

Une fois la porte 1 déverrouillée, c'est-à-dire une fois que les moyens de verrouillage ont été désactivés par le mécanisme de commande 12 sous l'effet de l'actionnement du levier d'ouverture 6, la porte 1 peut ensuite être déplacée vers sa position ouverte.

Le mécanisme de commande 12 (au même titre que les moyens de verrouillage de la porte 1) sont également connus et ne seront pas décrits plus en détail ici. Ce mécanisme de commande 12 peut par exemple comporter des leviers actionnés par la rotation de l'arbre 9 et déplaçant, par l'intermédiaire de biellettes, des butées de verrouillage de la porte 1, libérant ainsi la porte 1 du fuselage de l'aéronef.

L'ouverture de la porte 1 lorsque la cabine de l'aéronef est pressurisée, notamment durant le vol, est ici empêchée par un mécanisme d'ouverture conditionnelle de sécurité.

Le mécanisme d'ouverture conditionnelle comporte un élément de ressort sollicitant le volet d'évent 5 et le levier intérieur 6 l'un contre l'autre. Cet élément de ressort est ici constitué par une paire de ressorts 13 de traction tendus chacun entre un doigt 14 solidaire du levier intérieur 6 et un doigt 15 solidaire du volet d'évent 5.

Le levier intérieur 6 comporte par ailleurs une paire de pattes 16 se positionnant contre une paire de butées 17 du volet d'évent 5 lorsque le levier intérieur 6 et le volet d'évent 5 sont disposés l'un contre l'autre (ce qui est le cas sur la figure 1). Le levier intérieur 6, lorsqu'il est déplacé vers le haut (en référence aux figures) peut ainsi pousser et refermer le volet d'évent 5.

Le volet d'évent 5 est monté pivotant sur le levier intérieur 6 autour d'un deuxième axe de pivotement 18. Le deuxième axe de pivotement 18 est réalisé, dans le présent exemple, par deux pivots 19 du volet d'évent 5 reliés chacun à un bras 7 du levier intérieur 6. Le premier axe de pivotement 10 et le deuxième axe de pivotement 18 sont parallèles et non confondus. La distance entre ces deux axes 18, 19 est de l'ordre de 1 cm à quelques centimètres.

Le mécanisme d'ouverture conditionnelle comporte par ailleurs une butée 20 de volet qui est ici constituée par deux dents saillantes situées sur les rebords latéraux du volet d'évent 5 (sur la figure 1, seule la butée 20 de droite est visible tandis que la butée de gauche est cachée par la structure 2 de porte).

Ces butées 20 de volet sont adaptées à coopérer avec une surface d'arrêt 21. Dans le présent exemple, un bossage 22 est fixé sur la structure de porte 2, ce bossage 22 présentant, sur l'une de ses faces, la surface d'arrêt 21. Pour chacune des butées 20 de volet, le mécanisme d'ouverture conditionnelle comporte ainsi un bossage 22 situé en vis-à-vis de la butée 20 correspondante. Ce positionnement de chaque surface d'arrêt 21, en vis-à-vis d'une butée 20 de volet est tel qu'un plan orthogonal au premier axe de pivotement 10 passe à la fois par la surface d'arrêt 21 et par la butée 20 de volet.

Le fait qu'une butée 20 de volet et une surface d'arrêt 21 soient situées dans le même plan permet à la surface d'arrêt 21 de faire obstacle au mouvement de la butée 20 pour certaines trajectoires de la butée 20.

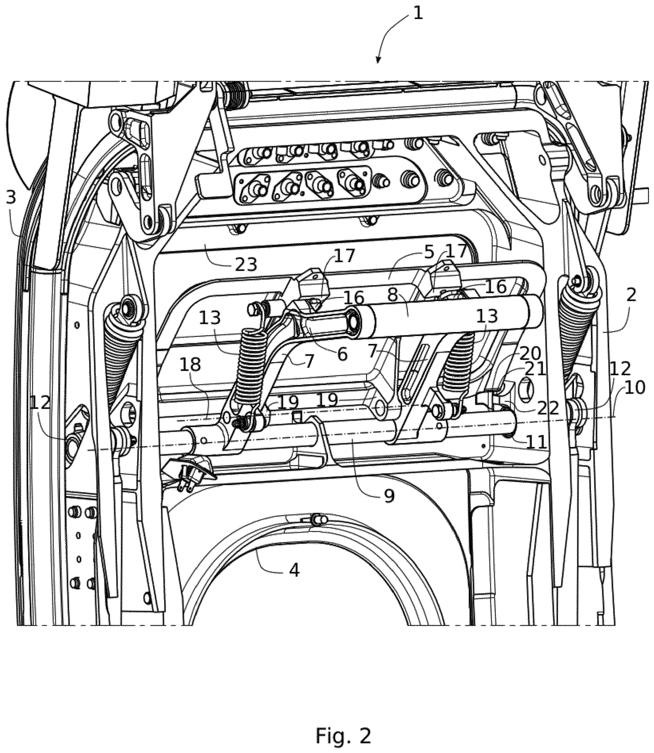

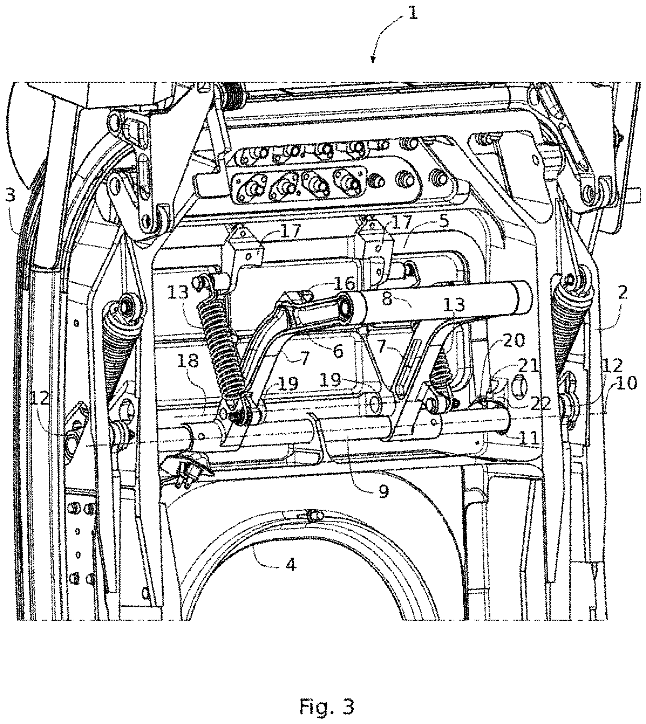

La figure 1 représente la porte 1 en position fermée et verrouillée. À partir de cette position de la figure 1, deux configurations sont possibles : une configuration dans laquelle les moyens d'ouverture conditionnelle autorisent le déverrouillage de la porte 1 (illustrée à la figure 2) ; et une configuration dans laquelle les moyens d'ouverture conditionnelle empêchent le déverrouillage de la porte 1 (illustrée à la figure 3).

Sur la figure 2, le volet d'évent 5 est représenté en position ouverte. Dans cette position, le volet d'évent 5 libère une fenêtre 23 (à l'inverse, dans la configuration de la figure 1, le volet d'évent 5 ferme hermétiquement la fenêtre 23). Pour aboutir à la configuration de la figure 2, la poignée 8 a été actionnée vers le bas de sorte que le levier intérieur 6 a pivoté autour du premier axe de pivotement 10. Au cours du pivotement du levier intérieur 6, il n'y a pas eu de mouvement relatif entre le volet d'évent 5 et le levier intérieur 6 car le volet d'évent 5 est resté maintenu contre le levier intérieur 6 par les ressorts 13. Cette configuration de la figure 2 est obtenue lorsque la pression différentielle est inférieure à une valeur prédéterminée correspondant à une valeur acceptable pour l'ouverture de la porte 1. Les seuils de pression différentielle acceptable sont connus de l'homme du métier et les règlementations peuvent par ailleurs les définir.

Les ressorts 13 sont calibrés pour que, lorsque la pression différentielle est inférieure à la valeur prédéterminée, les ressorts 13 maintiennent en permanence le volet d'évent 5 contre le levier intérieur 6 durant le pivotement de ce dernier. Le calibrage des ressorts 13 consiste à choisir leur raideur pour qu'ils soient à même d'entrainer le volet d'évent 5 avec le mouvement du levier intérieur 6 lorsque la pression différentielle est inférieure à la valeur prédéterminée, et à l'inverse pour qu'ils ne soient pas en mesure de vaincre la pression différentielle lorsqu'elle est supérieure à la valeur prédéterminée, les ressorts 13 s'étirant alors pour permettre le mouvement du levier intérieur 6 par rapport au volet d'évent 5.

Dans la configuration de la figure 2, les butées 20 de volet suivent une première trajectoire définie par le premier axe de pivotement 10. Les surfaces d'arrêt 21 sont disposées en dehors de cette première trajectoire et ne gênent donc pas le mouvement du volet d'évent 5. Autrement dit, dans la configuration de la figure 2, les surfaces d'arrêt ne limitent pas le mouvement des butées 20 de volet.

La figure 3 représente une configuration dans laquelle la poignée 8 a été actionnée vers le bas en vue de déverrouiller la porte 1 alors que la pression différentielle est supérieure à la valeur prédéterminée, c'est à dire lorsque la pression différentielle rend dangereuse l'ouverture de la porte. Dans cette configuration, le levier intérieur 6 a pivoté autour du premier axe de pivotement 10 et, durant ce pivotement, le volet d'évent 5 est resté en place, au moins sur sa partie supérieure, contre le panneau extérieur 3. En effet, compte tenu du calibrage des ressorts 13 décrits précédemment, la pression s'exerçant sur la surface intérieure du volet d'évent 5 maintient le volet en place contre sa fenêtre 23 tandis que les ressorts 13 s'étirent au fur et à mesure du pivotement du levier intérieur 6, les ressorts 13 n'exerçant pas une force suffisante pour mouvoir le volet d'évent 5. Cependant, la partie inférieure du volet d'évent 5 décrit un léger mouvement vers l'intérieur car les pivots 19 sont déplacés autour du premier axe de pivotement 10. Les butées 20 de volet décrivent donc une deuxième trajectoire. Les surfaces d'arrêt 21 sont situées sur cette deuxième trajectoire des butées 20 de volet. Cette deuxième trajectoire est définie par le deuxième axe de pivotement 18 conjointement avec le deuxième axe de pivotement 10. Lorsque les butées 20 de volet parcourent la deuxième trajectoire, le volet d'évent 5 et le levier intérieur 6 pivotent l'un par rapport à l'autre autour du deuxième axe 18.

Par conséquent, dans la configuration de la figure 3, le pivotement du levier intérieur 6 entraine les butées 20 de volet selon la deuxième trajectoire jusqu'à ce que ces dernières viennent buter chacune contre la surface d'arrêt 21 correspondante. Cette mise en butée de chaque butée 20 de volet contre sa surface d'arrêt 21 constitue une limite au pivotement du levier intérieur 6 qui ne peut par conséquent pas pivoter au-delà de cette limite.

Par ailleurs, les moyens de verrouillage de la porte 1 sont agencés pour que la course du levier intérieur 6 jusqu'à la limite constituée par cette mise en butée ne soit pas suffisante pour commander le déverrouillage des moyens de verrouillage. Autrement dit, pour déverrouiller la porte 1, le levier intérieur 6 doit être pivoté vers le bas au-delà de la limite constituée par la mise en butée des butées 20 de volet sur les surfaces d'arrêt 21. Dans la configuration de la figure 3, le déverrouillage de la porte est ainsi empêché car le mécanisme d'ouverture conditionnelle limite (par la mise en butée des éléments 20, 21) le pivotement du levier intérieur 5 à une course insuffisante pour procéder au déverrouillage des moyens de verrouillage.

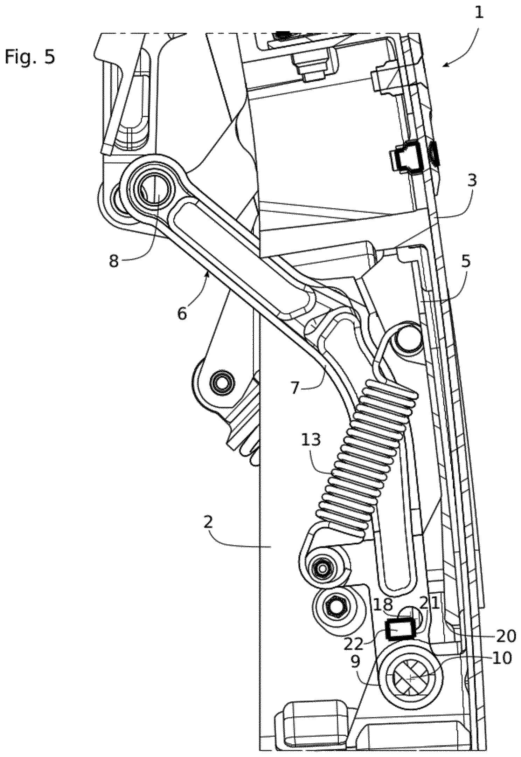

Les figures 5 à 7 sont des vues de profil illustrant plus en détail les configurations qui viennent d'être décrites.

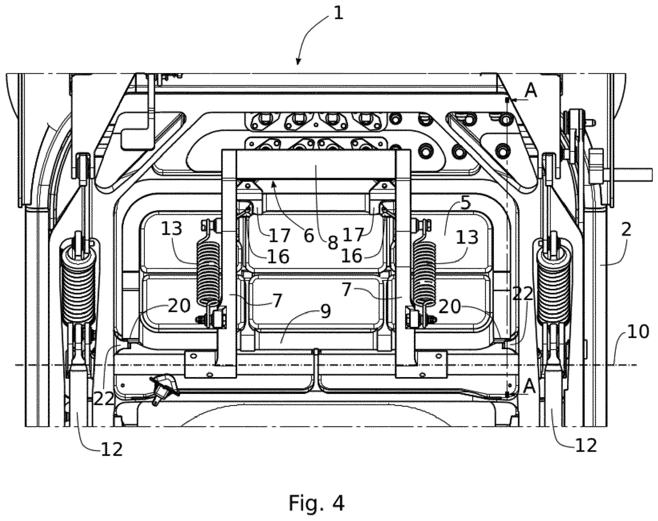

La figure 4 est une vue de face de la partie supérieure de la porte 1, définissant une coupe AA. Les figures 5 à 7 sont des vues selon cette coupe AA, pour les différentes configurations. La coupe AA montre le levier intérieur 6 vu de profil ainsi qu'une des butées 20 de volet et sa surface d'arrêt 21, vues en coupe.

La figure 5 est une coupe correspondant à la configuration de la figure 1. Dans cette configuration, la porte 1 est verrouillée et le levier intérieur 6 est en position haute, correspondant au verrouillage des moyens de verrouillage.

En plus de sa fonction liée au mécanisme d'ouverture conditionnelle, le levier intérieur 6 et le volet d'évent 5 peuvent de plus assurer une fonction supplémentaire de sécurité permettant d'empêcher la pressurisation de l'aéronef tant que la porte 1 n'a pas été verrouillée. En effet, l'aéronef ne peut être pressurisé que lorsque le volet d'évent 5 est fermé. L'aéronef ne peut donc être pressurisé que lorsque le levier intérieur 6 est dans sa position de la figure 1, position dans laquelle les butées 17 repoussent le volet d'évent 5 contre le panneau extérieur 3 de sorte que le volet d'évent 5 referme de manière étanche la fenêtre 23.

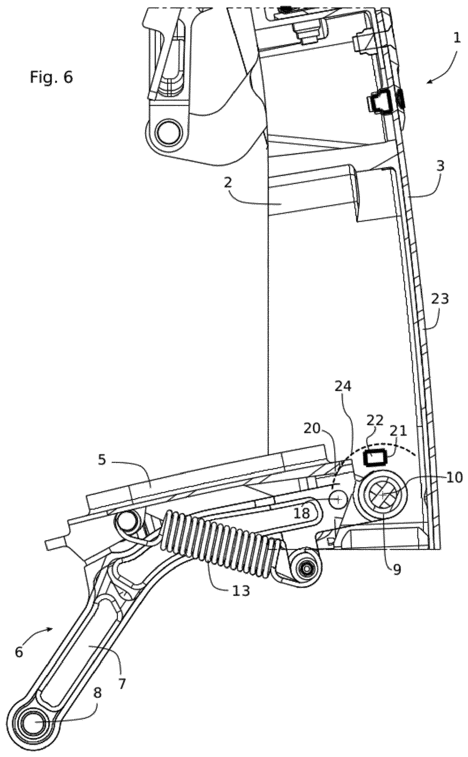

La figure 6 correspond à la configuration de la figure 2 où le déverrouillage de la porte 1 a été autorisé compte tenu d'une faible pression différentielle (inférieure au seuil prédéterminé) s'appliquant sur le volet d'évent 5. La première trajectoire 24 décrite par la butée 20 de volet entre sa position de la figure 5 et sa position de la figure 6 est schématisée en pointillés. Cette trajectoire 24 est un arc de cercle centré sur le premier axe de pivotement 10 car le levier intérieur 6 et le volet d'évent 5 restent solidaires sous l'action des ressorts 13 et tournent conjointement autour du premier axe de pivotement 10. La surface d'arrêt 21 est située en dehors de cette première trajectoire 24. Dans le présent exemple, la première trajectoire 24 contourne la surface d'arrêt 21 sans interférer avec elle. Le levier intérieur 6 peut donc parcourir toute la course nécessaire pour provoquer le déverrouillage de la porte 1 en commandant les moyens de verrouillage par le mécanisme de commande 12. La rotation conjointe du volet d'évent 5 et du levier intérieur 6 autour du premier axe de pivotement 10 permet cette première trajectoire 24 des butées 20 de volet de sorte que les butées 20 ne rencontrent pas les surfaces d'arrêt 21.

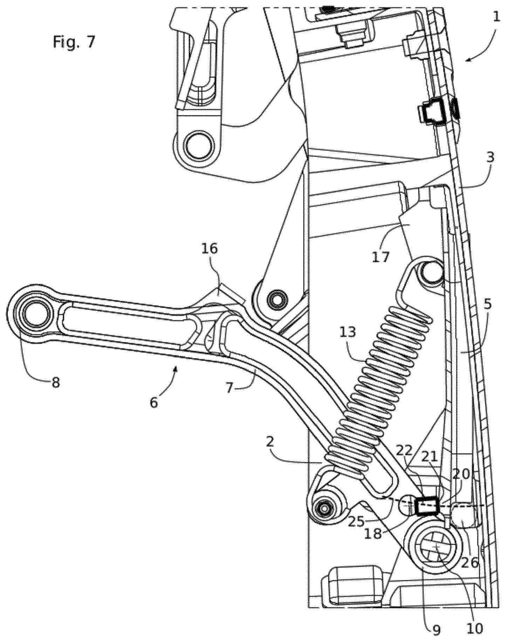

La figure 7 correspond à la configuration de la figure 3 dans laquelle le déverrouillage de la porte 1 est empêché pour cause de forte pression différentielle (supérieure au seuil prédéterminé) s'appliquant sur le volet d'évent 5. Dans cette configuration, le levier intérieur 6 a été pivoté vers le bas par un opérateur tandis que le volet d'évent 5 est maintenu, au moins par sa partie supérieure, contre le panneau extérieur 3 par la pression différentielle. Par ailleurs, la distance entre les deux axes de pivotement 10, 18 étant faible par rapport à la distance entre le premier axe de pivotement 10 et la poignée 8, la poignée 8 présente un effet de levier important qui permet, même avec cette pression différentielle élevée, de provoquer le déplacement du deuxième axe de pivotement 18 qui accompagne nécessairement le pivotement du levier intérieur 6 autour du premier axe de pivotement 10 (les pivots 19 étant montés sur le levier intérieur 6). Les butées 20 de volet décrivent alors chacune une deuxième trajectoire 25 qui est schématisée en pointillés sur la figure 7. Cette trajectoire est un arc de cercle centré au niveau du rebord supérieur du volet d'évent 5. Le rebord supérieur du volet d'évent 5 est en effet maintenu contre le rebord correspondant de la fenêtre 23 par la pression différentielle tandis que le rebord inférieur du volet d'évent 5 est légèrement décollé de la fenêtre 23 suite au déplacement du deuxième axe de pivotement 18 qui accompagne le pivotement du levier intérieur 6. Les surfaces d'arrêt 21 sont disposées sur cette deuxième trajectoire 25. Dans cette configuration, les butées 20 de volet viennent en contact contre les surfaces d'arrêt 21 sans avoir parcouru la course nécessaire au levier intérieur 6 pour déverrouiller les moyens de verrouillage de la porte 1. La course du levier intérieur 6 en pivotement vers le bas est ainsi limitée à la position de la figure 7 et ne permet pas le déverrouillage de la porte 1.

Le mécanisme d'ouverture conditionnelle remplit ici une fonction supplémentaire dite de « bris de glace » (« de-icing », en anglais). Selon cette fonction supplémentaire, si le volet d'évent 5 reste maintenu contre le panneau extérieur 3 non pas par une pression différentielle importante mais par la présence de glace sur la face externe du panneau extérieur 3, la configuration de la figure 7 permet de briser la glace sur le pourtour du volet d'évent 5, grâce au mouvement de la partie inférieure du volet d'évent 5. Le volet d'évent 5 ainsi libéré de la glace revient ensuite de luimême à la configuration de la figure 6 en contournant la surface d'arrêt 21 sous l'effet de la traction des ressorts 13.

En référence à la figure 7, un joint compressible 26 optionnel est disposé sur tout le pourtour du volet d'évent 5 pour assurer l'étanchéité de la jonction entre le volet d'évent 5 et la fenêtre 23. Le joint 26 est par exemple un joint élastomère de profil circulaire (représenté en pointillés). Le déplacement du deuxième axe de pivotement 18 sous l'effet de la rotation du levier intérieur 6, jusqu'à la position illustrée sur la figure, peut être mis à profit selon deux variantes :
- selon une première variante, l'épaisseur du joint compressible 26 est suffisante pour combler de manière étanche l'écart se créant entre le volet d'évent 5 et les rebords de la fenêtre 23 quand le volet d'évent est dans sa position de la figure 7. Selon cette première variante, le déplacement du deuxième axe de pivotement 18 n'a donc pas d'impact sur l'étanchéité du volet d'évent 5, le volet d'évent 5 continuant à fermer de manière étanche la fenêtre 23. Le déverrouillage de la porte 1 est simplement empêché, sans impact sur l'étanchéité de la porte 1 ;
- selon une deuxième variante, le diamètre du joint compressible 26 est inférieur à l'espace créé entre le volet d'évent 5 et le rebord de la fenêtre 23 par le déplacement du deuxième axe de pivotement 18. Dans ce cas, l'actionnement du levier intérieur 6, bien que ne permettant pas le déverrouillage de la porte 1, créé par ailleurs une fuite d'air sur la partie inférieure du volet d'évent 5. Cette fuite calibrée permet de dépressuriser lentement la cabine de l'aéronef en manipulant le levier intérieur 6, sans risque que ce dernier ne déverrouille la porte 1. Si le levier intérieur 6 est maintenu dans sa position de la figure 7, la dépressurisation lente se poursuit jusqu'à ce qu'une pression différentielle acceptable (inférieure au seuil prédéterminé) soit atteinte. Lorsque la pression différentielle passe sous le seuil prédéterminé, de la même manière que pour la fonction « bris de glace », le volet d'évent 5 est alors rappelé par les ressorts 13 contre le levier intérieur 6, les butées 20 de volet contournant alors les surfaces d'arrêt 21. La course du volet d'évent 5 est alors automatiquement libérée et le déverrouillage de la porte 1 peut avoir lieu en poursuivant le pivotement du levier intérieur 6 vers le bas conformément à la figure 6.

Des variantes de réalisation de la porte d'aéronef et de son mécanisme d'ouverture conditionnelle peuvent être prévues sans sortir du cadre de l'invention. Par exemple, les butées 20 de volet et les surfaces d'arrêt 21 peuvent varier en quantité et en position par rapport à l'exemple décrit précédemment. Selon une variante, la butée de volet peut être par exemple fixée sur les pivots 19 et la surface d'arrêt correspondante peut être située sur l'arbre 9 qui définit le premier axe de pivotement 10 de sorte que, dans sa première trajectoire, la butée de volet n'ait aucun mouvement relatif par rapport à la surface d'arrêt tandis que, dans sa deuxième trajectoire, la butée de volet vienne contre cette surface d'arrêt située sur l'arbre 9, limitant ainsi la course du levier intérieur 6.

Par ailleurs, la butée 20 de volet peut être constituée par tout élément de forme du volet d'évent 5, ou tout élément rapporté sur le volet d'évent 5.

Lors de la conception d'une porte d'aéronef selon l'invention, le positionnement de la surface d'arrêt et des butées de volet peut par exemple être réalisé de manière pragmatique en concevant tout d'abord un ensemble muni d'un levier intérieur avec son premier axe de pivotement, et d'un volet d'évent monté pivotant sur le levier intérieur selon un deuxième axe de pivotement. Une ou plusieurs butées de volet sont ensuite positionnées sur le volet d'évent. La première trajectoire des butées de volet (trajectoire résultante lorsque le volet d'évent et le levier intérieur pivotent conjointement autour du premier axe de pivotement) est ensuite déterminée. De même la deuxième trajectoire des butées de volet (trajectoire résultante du déplacement du deuxième axe de pivotement tandis que le volet d'évent est maintenu contre sa fenêtre) est ensuite également déterminée. Les surfaces d'arrêt sont ensuite positionnées de sorte qu'elles se trouvent à la fois sur la deuxième trajectoire et à la fois hors de la première trajectoire. L'invention est ainsi applicable facilement à une grande diversité de portes d'aéronef.

Dans les exemples décrits précédemment, le levier intérieur 6 forme un ensemble comportant des bras 7 et une poignée 8, cet ensemble actionnant directement le volet d'évent 5, ce qui permet d'une part la fonction du deuxième axe de pivotement 18 agissant de manière excentrique, et d'autre part l'intégration des pattes 16 sur les bras 7 de sorte que ces pattes 16 coopèrent directement avec les butées 17 du volet d'évent 5. En variante, le couplage du levier intérieur 6 au volet d'évent 5, via le mécanisme d'ouverture conditionnelle, peut être réalisé simplement par l'arbre 9, le volet d'évent 5 pouvant par exemple être déporté par rapport à la poignée 8.

## Revendications

1. Porte d'aéronef (1) comprenant :
- une structure (2) de porte et un panneau extérieur (3) fixé sur cette structure (2) de porte ;
- des moyens de verrouillage de la porte (1) sur le fuselage de l'aéronef ;
- un levier intérieur (6) d'ouverture de porte adapté à commander les moyens de verrouillage, ce levier intérieur (6) étant couplé à un volet d'évent (5) par un mécanisme d'ouverture conditionnelle comportant un ressort (13) sollicitant le volet d'évent (5) et le levier intérieur (6) l'un contre l'autre, ce mécanisme d'ouverture conditionnelle présentant deux modes : un mode autorisant le déverrouillage de la porte (1) lorsque la pression différentielle s'appliquant sur le volet d'évent (5) est inférieure à un seuil prédéterminé ; et un mode empêchant le déverrouillage de la porte (1) lorsque la pression différentielle s'appliquant sur le volet d'évent (5) est supérieure au seuil prédéterminé ;
cette porte d'aéronef (1) étant **caractérisée en ce que** :
- le mécanisme d'ouverture conditionnelle comporte : une butée (20) de volet disposée sur le volet d'évent (5) ; une surface d'arrêt (21) disposée en vis-à-vis de la butée (20) de volet ;
- le levier intérieur (6) est monté pivotant sur la structure (2) de porte, selon un premier axe de pivotement (10) définissant une première trajectoire (24) de la butée (20) de volet dans laquelle le volet d'évent (5) et le levier intérieur (6) sont maintenus l'un contre l'autre par le ressort (13) et pivotent ensemble autour du premier axe de pivotement (10), la surface d'arrêt (21) étant disposée en dehors de cette première trajectoire (24) de la butée (20) de volet ;
- le volet d'évent (5) est monté pivotant sur le levier intérieur (6), selon un deuxième axe de pivotement (18) définissant une deuxième trajectoire (25) de la butée (20) de volet dans laquelle le levier intérieur (6) pivote autour du premier axe de pivotement (10) tandis que le volet d'évent (5) et le levier intérieur (6) pivotent l'un par rapport à l'autre autour du deuxième axe de pivotement (18), la surface d'arrêt (21) étant disposée sur cette deuxième trajectoire (25) de la butée (20) de volet.

2. Porte d'aéronef selon la revendication 1, **caractérisée en ce que** la surface d'arrêt (21) est disposée sur la structure (2) de porte.

3. Porte d'aéronef selon la revendication 2, **caractérisée en ce que** la surface d'arrêt (21) est définie par un bossage (22) de la structure (2) de porte.

4. Porte d'aéronef selon l'une quelconque des revendications précédentes, **caractérisée en ce que** la butée de volet comporte une dent (20) saillante du volet d'évent (5).

5. Porte d'aéronef selon l'une quelconque des revendications précédentes, **caractérisée en ce que** la butée de volet comporte deux butées (20) disposées sur les rebords latéraux du volet d'évent (5), la surface d'arrêt étant constituée d'une surface d'arrêt (21) en vis-à-vis de chacune de ces butées (20).

6. Porte d'aéronef selon l'une quelconque des revendications précédentes, **caractérisée en ce que** le ressort comporte deux ressorts (13) de traction dont les extrémités sont reliées respectivement au volet d'évent (5) et au levier intérieur (6).

7. Porte d'aéronef selon l'une quelconque des revendications précédentes, **caractérisée en ce que** le deuxième axe de pivotement (18) est défini par au moins un pivot (19) par lequel le volet d'évent (5) est monté rotatif sur le levier extérieur (6).

8. Porte d'aéronef selon l'une quelconque des revendications précédentes, **caractérisée en ce que** le ressort (13) présente une raideur adaptée à :
- maintenir solidaires le levier intérieur (6) et le volet d'évent (5) lorsque la pression différentielle appliquée au volet d'évent (5) est inférieure au seuil prédéterminé ;
- permettre le pivotement du levier intérieur (6) par rapport au volet d'évent (5) lorsque la pression différentielle s'appliquant sur le volet d'évent (5) est supérieure au seuil prédéterminé.

9. Porte d'aéronef selon l'une quelconque des revendications précédentes, **caractérisée en ce que** le premier axe de pivotement (10) et le deuxième axe de pivotement (18) sont parallèles et non confondus.

10. Porte d'aéronef selon l'une quelconque des revendications précédentes, **caractérisée en ce que** le volet d'évent (5) comporte un joint d'étanchéité (26) sur son pourtour.

11. Porte d'aéronef selon la revendication 10, **caractérisée en ce que** le joint d'étanchéité (26) présente une épaisseur adaptée à maintenir l'étanchéité entre le volet d'évent (5) et le panneau extérieur (3) lorsque la butée (20) de volet est dans sa deuxième trajectoire (25) et est disposée contre la surface d'arrêt (21).

12. Porte d'aéronef selon la revendication 10, **caractérisée en ce que** le joint d'étanchéité (26) présente une épaisseur adaptée à créer une fuite calibrée entre le volet d'évent (5) et le panneau extérieur (3) lorsque la butée (20) de volet est dans sa deuxième trajectoire (25) et est disposée contre la surface d'arrêt (21).

13. Porte d'aéronef selon l'une quelconque des revendications précédentes, **caractérisée en ce que** la première trajectoire (24) est une trajectoire en arc de cercle centrée sur le premier axe de pivotement (10).

14. Porte d'aéronef selon l'une quelconque des revendications précédentes, **caractérisée en ce que** le premier axe de pivotement (10) est défini par un arbre (9) monté par des paliers (11) sur la structure (2) de porte, le levier intérieur (6) étant fixé sur cet arbre (9).

15. Porte d'aéronef selon la revendication 14, **caractérisée en ce que** ledit arbre (9) est solidaire d'un mécanisme de commande (12) des moyens de verrouillage de la porte (1).

16. Porte d'aéronef selon l'une quelconque des revendications précédentes, **caractérisée en ce que** le levier intérieur (6) comporte une patte (16) de levier, et **en ce que** le volet d'évent (5) comporte une butée (17), la patte (16) de levier étant disposée contre ladite butée (17) lorsque le volet d'évent (5) et le levier intérieur (6) sont disposés l'un contre l'autre.

## Patentansprüche

1. Flugzeugtür (1), die Folgendes beinhaltet:
- eine Türstruktur (2) und eine Außenverkleidung (3), die an dieser Türstruktur (2) befestigt ist;
- Mittel zum Verriegeln der Tür (1) am Rumpf des Flugzeugs;
- einen Innenhebel (6) zum Öffnen der Tür, der dazu angepasst ist, die Verriegelungsmittel zu betätigen, wobei dieser Innenhebel (6) mit einer Lüftungsklappe (5) gekoppelt ist, und zwar durch einen Mechanismus zum bedingten Öffnen, der eine Feder (13) umfasst, die die Lüftungsklappe (5) und den Innenhebel (6) gegeneinander drückt, wobei dieser Mechanismus zum bedingten Öffnen zwei Modi aufweist: einen Modus, der das Entriegeln der Tür (1) gestattet, wenn der Differenzdruck, der auf die Lüftungsklappe (5) wirkt, kleiner als ein vorgegebener Schwellenwert ist; und einen Modus, der das Entriegeln der Tür (1) verhindert, wenn der Differenzdruck, der auf die Lüftungsklappe (5) wirkt, größer als der vorgegebene Schwellenwert ist;
wobei diese Flugzeugtür (1) **dadurch gekennzeichnet ist, dass**:
- der Mechanismus zum bedingten Öffnen Folgendes umfasst: einen Klappenanschlag (20), der an der Lüftungsklappe (5) angeordnet ist; eine Anschlagfläche (21), die gegenüber dem Klappenanschlag (20) angeordnet ist;
- der Innenhebel (6) gemäß einer ersten Schwenkachse (10), die eine erste Trajektorie (24) des Klappenanschlags (20) definiert, schwenkbar an der Türstruktur (2) montiert ist, wobei die Lüftungsklappe (5) und der Innenhebel (6) durch die Feder (13) aneinander gehalten werden und gemeinsam um die erste Schwenkachse (10) schwenken, wobei die Anschlagfläche (21) außerhalb dieser ersten Trajektorie (24) des Klappenanschlags (20) angeordnet ist;
- die Lüftungsklappe (5) gemäß einer zweiten Schwenkachse (18), die eine zweite Trajektorie (25) des Klappenanschlags (20) definiert, schwenkbar an dem Innenhebel (6) montiert ist, wobei der Innenhebel (6) um die erste Schwenkachse (10) schwenkt, während die Lüftungsklappe (5) und der Innenhebel (6) relativ zueinander um die zweite Schwenkachse (18) schwenken, wobei die Anschlagfläche (21) auf dieser zweiten Trajektorie (25) des Klappenanschlags (20) angeordnet ist.

2. Flugzeugtür nach Anspruch 1, **dadurch gekennzeichnet, dass** die Anschlagfläche (21) an der Türstruktur (2) angeordnet ist.

3. Flugzeugtür nach Anspruch 2, **dadurch gekennzeichnet, dass** die Anschlagfläche (21) durch einen Vorsprung (22) der Türstruktur (2) definiert ist.

4. Flugzeugtür nach einem beliebigen der vorhergehenden Ansprüche, **dadurch gekennzeichnet, dass** der Klappenanschlag einen Zahn (20) umfasst, der von der Lüftungsklappe (5) vorsteht.

5. Flugzeugtür nach einem beliebigen der vorhergehenden Ansprüche, **dadurch gekennzeichnet, dass** der Klappenanschlag zwei Anschläge (20) umfasst, die an den Seitenrändern der Lüftungsklappe (5) angeordnet sind, wobei die Anschlagfläche aus einer Anschlagfläche (21) gegenüber jedem dieser Anschläge (20) besteht.

6. Flugzeugtür nach einem beliebigen der vorhergehenden Ansprüche, **dadurch gekennzeichnet, dass** die Feder zwei Zugfedern (13) umfasst, deren Enden jeweils mit der Lüftungsklappe (5) und dem Innenhebel (6) verbunden sind.

7. Flugzeugtür nach einem beliebigen der vorhergehenden Ansprüche, **dadurch gekennzeichnet, dass** die zweite Schwenkachse (18) durch mindestens einen Drehzapfen (19) definiert ist, durch den die Lüftungsklappe (5) drehbar an dem Außenhebel (6) montiert ist.

8. Flugzeugtür nach einem beliebigen der vorhergehenden Ansprüche, **dadurch gekennzeichnet, dass** die Feder (13) eine Steifigkeit aufweist, die dazu angepasst ist:
- den Innenhebel (6) und die Lüftungsklappe (5) zusammenzuhalten, wenn der auf die Lüftungsklappe (5) wirkende Differenzdruck kleiner als der vorgegebene Schwellenwert ist;
- das Schwenken des Innenhebels (6) mit Bezug auf die Lüftungsklappe (5) zu gestatten, wenn der auf die Lüftungsklappe (5) wirkende Differenzdruck größer als der vorgegebene Schwellenwert ist.

9. Flugzeugtür nach einem beliebigen der vorhergehenden Ansprüche, **dadurch gekennzeichnet, dass** die erste Schwenkachse (10) und die zweite Schwenkachse (18) parallel sind und nicht zusammenfallen.

10. Flugzeugtür nach einem beliebigen der vorhergehenden Ansprüche, **dadurch gekennzeichnet, dass** die Lüftungsklappe (5) an ihrem Umfang eine Dichtung (26) umfasst.

11. Flugzeugtür nach Anspruch 10, **dadurch gekennzeichnet, dass** die Dichtung (26) eine Dicke aufweist, die dazu angepasst ist, die Dichtheit zwischen der Lüftungsklappe (5) und der Außenverkleidung (3) aufrecht zu erhalten, wenn sich der Klappenanschlag (20) auf seiner zweiten Trajektorie (25) befindet und an der Anschlagfläche (21) angeordnet ist.

12. Flugzeugtür nach Anspruch 10, **dadurch gekennzeichnet, dass** die Dichtung (26) eine Dicke aufweist, die dazu angepasst ist, ein kalibriertes Leck zwischen der Lüftungsklappe (5) und der Außenverkleidung (3) zu erzeugen, wenn sich der Klappenanschlag (20) auf seiner zweiten Trajektorie (25) befindet und an der Anschlagfläche (21) angeordnet ist.

13. Flugzeugtür nach einem beliebigen der vorhergehenden Ansprüche, **dadurch gekennzeichnet, dass** die erste Trajektorie (24) eine bogenförmige Trajektorie ist, die um die erste Schwenkachse (10) zentriert ist.

14. Flugzeugtür nach einem beliebigen der vorhergehenden Ansprüche, **dadurch gekennzeichnet, dass** die erste Schwenkachse (10) durch eine Welle (9) definiert ist, die mit Hilfe von Lagern (11) an der Türstruktur (2) montiert ist, wobei der Innenhebel (6) an dieser Welle (9) befestigt ist.

15. Flugzeugtür nach Anspruch 14, **dadurch gekennzeichnet, dass** die Welle (9) mit einem Mechanismus (12) zur Betätigung der Verriegelungsmittel der Tür (1) fest verbunden ist.

16. Flugzeugtür nach einem beliebigen der vorhergehenden Ansprüche, **dadurch gekennzeichnet, dass** der Innenhebel (6) einen Hebelnocken (16) umfasst und dass die Lüftungsklappe (5) einen Anschlag (17) umfasst, wobei der Hebelnocken (16) an dem Anschlag (17) angeordnet ist, wenn die Lüftungsklappe (5) und der Innenhebel (6) aneinander angeordnet sind.

## Claims

1. An aircraft door (1) comprising:
- a door structure (2) and an outer panel (3) fastened to this door structure (2);
- means for locking the door (1) to the fuselage of the aircraft;
- an inside door opening lever (6) capable of operating the locking means, this inside lever (6) being coupled to a vent flap (5) by a conditional opening mechanism having two modes, namely a mode allowing the release of the door (1) when the differential pressure applied to the vent flap (5) is below a predetermined threshold and a mode preventing the release of the door (1) when the differential pressure applied to the vent flap (5) is above the predetermined threshold;
this aircraft door (1) being **characterized in that**:
- the conditional opening mechanism comprises: a spring (13) urging the vent flap (5) and the inside lever (6) against each other; a flap stop (20) positioned on the vent flap (5); a stop surface (21) positioned facing the flap stop (20);
- the inside lever (6) is mounted pivotably on the door structure (2), about a first pivot axis (10) defining a first trajectory (24) of the flap stop (20) in which the vent flap (5) and the inside lever (6) are held against each other by the spring (13) and pivot together about the first pivot axis (10), the stop surface (21) being positioned outside this first trajectory (24) of the flap stop (20);
- the vent flap (5) is mounted pivotably on the inside lever (6), about a second pivot axis (18) defining a second trajectory (25) of the flap stop (20) in which the inside lever (6) pivots about the first pivot axis (10) while the vent flap (5) and the inside lever (6) pivot relative to each other about the second pivot axis (18), the stop surface (21) being positioned on this second trajectory (25) of the flap stop (20).

2. The aircraft door as claimed in claim 1, **characterized in that** the stop surface (21) is positioned on the door structure (2).

3. The aircraft door as claimed in claim 2, **characterized in that** the stop surface (21) is defined by a boss (22) on the door structure (2).

4. The aircraft door as claimed in any of the preceding claims, **characterized in that** the flap stop comprises a tooth (20) projecting from the vent flap (5).

5. The aircraft door as claimed in any of the preceding claims, **characterized in that** the flap stop comprises two stops (20) positioned on the lateral edges of the vent flap (5), the stop surface being formed by a stop surface (21) facing each of these stops (20).

6. The aircraft door as claimed in any of the preceding claims, **characterized in that** the spring comprises two tension springs (13), the ends of which are connected to the vent flap (5) and to the inside lever (6) respectively;

7. The aircraft door as claimed in any of the preceding claims, **characterized in that** the second pivot axis (18) is defined by at least one pivot (19) by means of which the vent flap (5) is mounted rotatably on the inside lever (6);

8. The aircraft door as claimed in any of the preceding claims, **characterized in that** the spring (13) has a stiffness suitable for:
- keeping the inside lever (6) and the vent flap (5) fixed to each other when the differential pressure applied to the vent flap (5) is below the predetermined threshold;
- allowing the inside lever (6) to pivot relative to the vent flap (5) when the differential pressure applied to the vent flap (5) is above the predetermined threshold.

9. The aircraft door as claimed in any of the preceding claims, **characterized in that** the first pivot axis (10) and the second pivot axis (18) are parallel and do not coincide.

10. The aircraft door as claimed in any of the preceding claims, **characterized in that** the vent flap (5) comprises a sealing gasket (26) on its periphery.

11. The aircraft door as claimed in claim 10, **characterized in that** the sealing gasket (26) has a thickness suitable for maintaining the seal between the vent flap (5) and the outer panel (3) when the flap stop (20) is in its second trajectory (25) and is positioned against the stop surface (21).

12. The aircraft door as claimed in claim 10, **characterized in that** the sealing gasket (26) has a thickness suitable for creating a calibrated leakage between the vent flap (5) and the outer panel (3) when the flap stop (20) is in its second trajectory (25) and is positioned against the stop surface (21).

13. The aircraft door as claimed in any of the preceding claims, **characterized in that** the first trajectory (24) is a trajectory in the form of a circular arc centered on the first pivot axis (10).

14. The aircraft door as claimed in any of the preceding claims, **characterized in that** the first pivot axis (10) is defined by a shaft (9) mounted by bearings (11) on the door structure (2), the inside lever (6) being fastened to this shaft (9).

15. The aircraft door as claimed in claim 14, **characterized in that** said shaft (9) is fixed to an operating mechanism (12) for the door locking means (1).

16. The aircraft door as claimed in any of the preceding claims, **characterized in that** the inside lever (6) comprises a lever lug (16), and **in that** the vent flap (5) comprises a stop (17), the lever lug (16) being positioned against said stop (17) when the vent flap (5) and the inside lever (6) are positioned against each other.
